# EUROPEAN PATENT APPLICATION

(11) **EP 1 842 958 A1**
(43) Date of publication of application: **10.10.2007**
(21) Application number: 06712165.7
(22) Date of filing: 23.01.2006
(51) Int. Cl.: D06M 15/693, B60C 9/00, B60C 9/20, D02G 3/36, D02G 3/48, D06M 15/333, D06M 15/41, D06M 15/55, D06M 101/32

(54) **POLYESTER FIBER CORD FOR REINFORCING RUBBER AND METHOD FOR PRODUCTION THEREOF**

(30) Priority: 21.01.2005 JP 2005013749
(71) Applicant: TORAY INDUSTRIES, INC., Tokyo 103-8666 (JP)
(72) Inventor: MATSUMURA, Masato, zaki-shi, Aichi, 4440938 (JP); MANABE, Takao, Ichinomiya-shi Aichi, 491-0912 (JP); TONOMURA, Jun, Daiwa-cho, Okazaki-shi, Aichi, 4440931 (JP)
(74) Representative: Webster, Jeremy Mark
(86) International application number: PCT/JP2006/300949
(87) International publication number: WO 2006/078013

(57) **Abstract**

A polyester fiber cord for reinforcing rubber, **characterized in that** it is a polyester fiber cord for reinforcing rubber having inner and outer adhesive layers and the inner layer portion of said adhesive layers consists of a resin layer containing a gas barrier resin of which oxygen permeation rate measured under condition of humidity of 50 %RH is 10 cc.20 µm/m². day·atm or less, and the outer layer portion of said adhesive resin layers consists of a resin layer of which main components are an early condensate of resorcin· formaldehyde and a rubber latex, respectively, and a polyester fiber cord for reinforcing rubber having inner and outer adhesive layers, **characterized in that**, the inner layer portion of said adhesive resin layers consists of a layer containing polyvinyl alcohol, and the outer layer portion of said adhesive resin layers consists of a layer of which main components are resorcin· formaldehyde and a rubber latex, respectively.

## Description

### [Technical Field]

The present invention relates to a polyester fiber cord for reinforcing rubber which is used for a tire, hose, belt or the like, and a production method thereof. In more detail, it relates to a polyester fiber cord for reinforcing rubber in which heat resistant adhesion and heat resistant strength retention, when exposed to a high temperature for a long time in a rubber in vulcanization process of rubber or during use as a product, are greatly improved, in particular, it relates to a polyester fiber cord for reinforcing rubber suitable for a cap ply cord of radial tire, and a production method thereof.

### [Technical Background]

Polyester fiber has an excellent strength, modulus and thermal dimensional stability and accordingly it has conventionally been used widely as a reinforcing material for rubber product such as a tire, hose and belt. The polyester fiber degrades by heat under a high temperature circumstance when it is used as a reinforcing material by being embedded in a rubber product. Such a chemical degradation is affected by the rubber itself and various additives compounded in the rubber. In a rubber, a vulcanization accelerator such as thiuram-based, sulfenamide-based or guanidine-based substance, amine-based antioxidant or the like are compounded and a polyester fiber exposed at a high temperature in the rubber is decomposed by aminolysis or hydrolysis mainly by these amine-based compounds or by low molecular weight compounds or water molecule generated by oxidation degradation of the rubber itself or by water contained in the rubber. There was a problem that the polyester fiber decomposed by the aminolysis and/or hydrolysis is significantly impaired in initial characteristics such as adhesive property or strength and becomes impossible to be used.

When the polyester fiber is decomposed by aminolysis or hydrolysis, a decrease of strength or decrease of adhesive property between the rubber and the fiber layer accompanied by a molecular chain breakage is generated. However, in case where the polyester fiber is used as a fiber for reinforcing rubber, although it has such problems, since it is excellent in high strength, high modulus and thermal dimensional stability, in addition, improvements in fatigue resistance and adhesive property have been made together with improvement of tire production technique, it is recently used as a carcass material of radial tire of most of passenger car. However, since it has the above-mentioned fatal defect, it is the actual situation that its use is restricted to carcass material of passenger car of which tire is of relatively small size and is not likely to accumulate heat therein generated during high speed driving and unlikely to degrade. For large scale tires such as for a track, bus or the like, it is used only for a very limited field. Generally saying, the polyester fiber cord is not used for tires of track and bus, tire of airplane, tire of large passenger car, tire of racing car or the like.

Furthermore, recently, a high performance tire which is suitable for high speed driving is more demanded, and in the radial tire developed to meet the requirement, a cap ply cord becomes to be used to firmly suppress from over the steel belt an expansion of tire by the centrifugal force at high speed driving and the compressive strength to the earth. Since the cap ply cord generate more heat than the carcass portion, the conventional polyester cord cannot be used, and nylon 66 fiber which is excellent in adhesive property at high temperature is used.

However, as the characteristics of said cap ply cord, since it is preferable to be of high modulus, as its fiber material, polyester fiber is preferable, and furthermore, since the polyester fiber is also of low price, a development of a polyester fiber cord which can be used for a cap ply has been strongly demanded. For that purpose, first of all, a big improvement of the heat resistant adhesion, and an improvement of the heat resistant strength retention are necessary.

As techniques which disclose the improvement of the heat resistant adhesion of polyester fiber, there are patent documents 1 to 4.

Patent document 1 discloses a treating method of polyester fiber in which a linear aromatic polyester pretreated with a polyepoxide compound beforehand is treated with the first treating agent containing a polyepoxide compound and N-methoxymethyl nylon, and next, treated with the second treating agent consisting of a resorcin·formalin·latex, ethylene urea compound and cresol novolac type epoxy compound.

Patent document 2 discloses a treating method of polyester fiber in which a linear aromatic polyester fiber is treated with a pretreating agent containing a polyepoxide compound and a water soluble nylon, next treated with the first treating agent containing a polyepoxide compound, blocked isocyanate compound and rubber latex, and further treated with the second treating agent consisting of a resorcin·formalin·rubber latex, the above-mentioned ethylene urea compound and a phenol novolac type epoxy compound.

Patent document 3 discloses a treating method of polyester fiber in which a linear aromatic polyester fiber is treated with a pretreating agent containing a cresol novolac type epoxy compound and water soluble nylon, next treated with the first treating agent containing a polyepoxide compound, blocked isocyanate compound and rubber latex, and further treated with the second treating agent consisting of a resorcin·formalin·rubber latex, the above-mentioned ethylene urea compound and phenol novolac type epoxy compound.
patent document 4 discloses a treating method of polyester fiber in which a linear aromatic polyester fiber is treated with a pretreating agent containing an ethylene urea compound and water soluble nylon, next treated with the first treating agent containing an epoxide compound and rubber latex, and further treated with the second treating agent consisting of a resorcin· formalin·latex, the above-mentioned ethylene urea compound and phenol novolac type epoxy compound.

The above-mentioned techniques disclosed in the patent documents, compared to the conventional bonding method of polyester fiber, show improvements in heat resistant adhesion and heat resistant strength retention at high temperature, but the improvements were not sufficient yet. In particular, as a cord for a cap ply of radial tire which is the object of the present invention, it was not a level which can be commercialized.

In addition, not only in the above-mentioned effects, but also in the following points, the techniques of the patent documents and the present invention are different in their constitutions.

The patent document 1 is different in the points that a pretreatment with a pretreating agent is carried out, but in the present invention a pretreatment is unnecessary; and that, as the composition of the first treating agent, polyvinyl alcohol which is used in the present invention is not used.

The patent document 2 is also different in the points that a pretreatment with a pretreating agent is carried out, but in the present invention a pretreatment is unnecessary; and that, as the composition of the adhesive, polyvinyl alcohol which is used in the present invention is not used.

The patent document 3 and patent document 4 are also, similar to the relation between the above-mentioned patent document 2 and the present invention, different in points of necessity of the pretreatment and not containing the polyvinyl alcohol, and they are apparently different techniques.
[patent document 1] Japanese Unexamined Patent Publication No.1887/21875A
[patent document 2] Japanese Unexamined Patent Publication No.1887/27089A
[patent document 3] Japanese Unexamined Patent Publication No.1887/276083A
[patent document 4] Japanese Unexamined Patent Publication No.1887/276084A

### [Disclosure of the Invention]

### [Problem to be Solved by the Invention]

The object of the present invention is to provide a polyester fiber cord for reinforcing rubber, which could not be achieved by the conventional arts, in which, when it is exposed to a high temperature, the heat resistant adhesion of the polyester fiber with the rubber is improved, and in addition, the heat resistant strength retention is improved, and in particular, which is a polyester fiber cord for reinforcing rubber suitable as a cap ply cord for radial tire, and a production method thereof.

### [Means for Solving the Problem]

In order to achieve the above-mentioned object, the polyester fiber cord for reinforcing rubber of the present invention has mainly the following constitution. That is, the present invention is a polyester fiber cord for reinforcing rubber having inner and outer adhesive layers, characterized in that, the inner layer portion of said adhesive layers consists of a resin layer containing a gas barrier resin of which oxygen permeation rate measured under condition of a humidity of 50% RH is 10 cc·20 µm/m²·day·atm or less, and the outer layer portion of said adhesive resin layers consists of a resin layer of which main components are an early condensate of resorcin·formaldehyde and a rubber latex, respectively.

Concretely, the present invention is a polyester fiber cord for reinforcing rubber having inner and outer adhesive layers, characterized in that, the inner layer portion of said adhesive layers consists of a resin layer containing polyvinyl alcohol, and in addition, the outer layer portion of said adhesive consists of an early condensate of resorcin· formaldehyde and a rubber latex as main components, respectively.

Where, in the polyester fiber cord for reinforcing rubber of the present invention, the following (1) to (5) are preferable conditions, and still more excellent effects are expected by satisfying these conditions.
(1) An epoxy compound is contained in the inner layer portion of the adhesive layer of the above-mentioned cord.
(2) An amount of the above-mentioned polyvinyl alcohol is in the range of 10 to 50 wt% to the total solid content of the adhesive of said inner layer portion.
(3) A saponification degree of the above-mentioned polyvinyl alcohol is 70 to 90 mol%.
(4) A deposited amount of the resin in the layer of inner layer portion of the above-mentioned adhesive resin layers is, in solid content ratio, 0.5 to 10 wt% to the fiber weight, and in addition, a deposited amount of the resin in the outer layer portion is, in solid content ratio, 1 to 10 wt% to the fiber weight.
(5) The above-mentioned polyester fiber cord for reinforcing rubber is a twisted cord subjected to a first twist and a second twist and the first twist coefficient K₁ is 300 ≤ K₁ ≤ 1200 and the second twist coefficient K₂ is 400 ≤ K₂ ≤ 1600. (Where, K = T x D^{1/2}, T: twist number per unit length (turns/10cm), D: marked denier)
   Furthermore, in the production method of the polyester fiber cord for reinforcing rubber of the present invention, the following (6) to (11) are preferable conditions, and still more excellent effects are expected by satisfying these conditions.
(6) In the production method of polyester fiber cord for reinforcing rubber to which the adhesive is imparted by a 2 baths dipping method, in the first bath, an adhesive containing polyvinyl alcohol is imparted, and in the second bath, an adhesive containing an early condensate of resorcin·formaldehyde and a rubber latex is imparted.
(7) In the adhesive containing polyvinyl alcohol used in the above-mentioned first bath, an epoxy compound is contained.
(8) An amount of the above-mentioned polyvinyl alcohol is in the range of 10 to 50 wt% to the total solid component of the adhesive in the inner layer portion of the adhesive layers.
(9) A saponification degree of the above-mentioned polyvinyl alcohol is 70 to 90 mol%.
(10) An amount of deposited resin in the inner layer portion of said adhesive layers in solid content ratio is 0.5 to 10 wt% to the fiber weight, and in addition, an amount of deposited resin in the outer layer portion of said adhesive layers in solid content ratio is 1 to 10 wt% to the fiber weight.
(11) In a production method of the above-mentioned polyester fiber cord for reinforcing rubber, it is a twisted cord subjected to a first twist and then subjected to a second twist, the first twist coefficient K₁ is 300 ≤ K₁ ≤ 1200 and the second twist coefficient K₂ is 400 ≤ K₂ ≤ 1600. (Where, K = T x D^{1/2}, T: twist number per unit length (turns/10cm), D: marked denier)

### [Effect of the Invention]

According to the polyester fiber cord for reinforcing rubber and production method thereof of the present invention, the heat resistant adhesion and heat resistant strength retention, when exposed to a high temperature in a rubber for a long time during vulcanization of rubber or during product use, are significantly improved. The rubbery product reinforced by the polyester fiber cord of the present invention, when used as a tire, belt or hose, can stand a severe condition for a long time. In particular, it is suitable as a cap ply cord of radial tire to which conventional polyester fibers cord could not be applied.

### [Best Embodiment for Carrying Out the Invention]

The polyester fiber of the present invention consists of polyester made from a dicarboxylic acid and glycol component, and especially, polyethylene terephthalate made from terephthalic acid and ethylene glycol is preferable.

For the polyester fiber cord for reinforcing rubber of the present invention, in order to have excellent mechanical characteristics such as a high strength, high toughness, high modulus, low shrinkage and high fatigue resistance, and in addition, in order to have an excellent chemical durability such as an excellent hydrolysis resistance and aminolysis resistance even exposed to a high temperature in a rubber for a long time, it is preferable that the polyester fiber used in the present invention has the following characteristics.
(1) inherent viscosity (IV) = 0.7 to 1.2, more preferably, 0.8 to 1.1.
(2) carboxyl terminal (COOH) = 10 to 30 eq/t, more preferably, 12 to 25 eq/t
(3) diethylene glycol (DEG) = 0.5 to 1.5, preferably, 0.5 to 1.2%
(4) strength (T) = 6.0 to 10.0 cN/dtex, more preferably, 7.0 to 9.0 cN/dtex
(5) elongation (E) = 8 to 20%, more preferably, 10 to 16%
(6) medium elongation (ME) =4.0 to 6. 5%, more preferably, 4.5 to 6.0%
(7) dry heat shrinkage (ΔS_{150°C}) = 2.0 to 12.0%, more preferably, 3.0 to 10.0%

In order to provide, especially, a chemical durability to the polyester fiber used in the polyester cord for reinforcing rubber of the present invention, it is advantageous that the viscosity is high, the amount carboxyl terminal is small and the amount of diethylene glycol is small.

The polyester used in the present invention, in order to decrease carboxyl terminals, for example, may be modified with carboxyl terminal blocking agent such as a carbodiimide compound, epoxy compound, isocyanate compound or oxazoline compound.

The polyester fiber used in the present invention is not restricted in fiber thickness, number of filaments, cross-sectional configuration or the like, but usually those of 200 to 5000 dtex, 30 to 1000 filaments and circular cross-sectional fiber are used, and it is preferable to be 250 to 3000dtex, 50 to 500 filaments and circular cross-sectional fiber.

The polyester fiber cord for reinforcing rubber of the present invention is obtained by twisting the above-mentioned polyester fiber to make into a gray cord and subjected it to an adhesive treatment as it is or after woven it into a gray tire cord fabric. The gray cord used for an ordinary tire cord for carcass is that subjected to a first twist in S or Z direction and then 2 or 3 of the first twisted cords are paralleled, and usually subjected to a second twist of the same number as that of the first twist in the opposite direction to obtain a ply cord. Next, said gray cord as warp, and a cotton yarn as weft, or polyester fiber covered with a cotton yarn as weft, a gray fabric is woven. Next, said gray tire cord fabric is subjected to an adhesive treatment to obtain a dipped fabric.

On the other hand, in case of a hose, belt and cap ply cord, the polyester fiber is subjected to a first twist. And as it is, the polyester fiber is subjected to an adhesive treatment to obtain a dipped cord. Otherwise, 2 or 3 of the first twisted cords are paralleled as the above-mentioned, subjected to a second twist of the same number as that of the first twist in the opposite direction to obtain a ply cord, and as it is, subjected to an adhesive treatment to obtain a dipped cord.

The polyester fiber cord for reinforcing rubber of the present invention to which the adhesive is imparted means both of the above-mentioned dipped fabric and the dipped cord.

The polyester fiber cord for reinforcing rubber of the present invention is a polyester fiber cord for reinforcing rubber having inner and outer adhesive layers, characterized in that the inner layer portion of said adhesive layers consists of a resin layer containing a gas barrier resin of which oxygen permeation rate measured under condition of a humidity of 50 %RH is 10 cc. 20 µm/m². day·atm or less, and in addition, the outer layer portion of said adhesive resin layers consists of a resin layer of which main components are an early condensate of resorcin·formaldehyde and a rubber latex, respectively.

The inner layer portion of the adhesive resin layers imparted to the polyester fiber cord for reinforcing rubber of the present invention means the deposited portion of the adhesive component of the first bath of the 2 baths dipping method of the present invention mainly mentioned below, and it is the portion of the surface of the polyester cord and partially permeated within the cord. In addition, the outer layer portion of said adhesive layer is the portion coated over the inner layer portion of said adhesive resin layers. A boundary portion in which part of the adhesive components are mixed is also present.

Furthermore, the polyester fiber cord for reinforcing rubber of the present invention is a polyester fiber cord for reinforcing rubber having inner and outer adhesive layers, characterized in that, the inner layer portion of said adhesive resin layers consists of a resin layer containing polyvinyl alcohol, and the outer layer portion of said adhesive layers consists of a resin layer of which main components are an early condensate of resorcin·formaldehyde and a rubber latex, respectively.

In the polyester fiber cord for reinforcing rubber of the present invention, the inner layer portion of the adhesive resin layer, i.e., the cord side portion consists of a resin layer containing a gas barrier resin, and regarding said gas barrier resin, it is necessary that an oxygen permeation rate measured under condition of a humidity of 50% RH is 10 cc·20 µm/m²·day· atm or less, preferably, 8cc.20 µm/m²·day· atm or less, more preferably, 6cc· 20 µm/m²·day· atm or less. If it exceeds 10cc· 20 µm/m²·day·atm, adhesiveness of the cord and the rubber after exposing to a high temperature may decrease.

The gas barrier resin is a resin having an effect to prevent gas permeation, and as examples, ethylene-vinyl alcohol resin, vinylidene chloride resin, polyacrylonitrile resin, polyvinyl alcohol resin, nylon resin, polyester resin or the like are mentioned. The adhesive layer containing the gas barrier resin forms a film on the surface of the polyester fiber and prevents permeation of low molecular weight amine component or water molecule generated by thermal decomposition of the rubber and the early condensate of resorcin· formaldehyde and the rubber latex, which are the main components of the adhesive of the outer layer portion of the cord, exposed to a high temperature for a long time, into the polyester fiber cord to thereby make it possible to suppress thermal decomposition of the polyester. As a result, an epoch-making effect, that not only enable it to prevent the decrease of strength of the polyester fiber cord but also it is possible to prevent the decrease of the adhesiveness, is obtained.

Furthermore, in the polyester fiber cord for reinforcing rubber of the present invention, the inner layer portion of the adhesive resin layer, i.e., the cord side portion consists of the resin layer containing polyvinyl alcohol. The resin layer containing the polyvinyl alcohol forms a film on the surface of the polyester fiber, and prevents permeation of low molecular weight amine component or water molecule, generated by thermal decomposition of the rubber and the early condensate of resorcin· formaldehyde and the rubber latex which are the main components of the outer layer portion of the adhesive layers exposed to a high temperature for a long time, into the polyester fiber cord, to thereby make it possible to suppress thermal decomposition of the polyester. As a result, an epoch-making effect that, not only enable it to prevent the decrease of strength of the polyester fiber cord but also to prevent the decrease of the adhesiveness, is obtained.

In the polyester fiber cord of the present invention, it is the characterizing feature of the polyester fiber cord for reinforcing rubber of the present invention that the layer of the polyvinyl alcohol which is deposited on the surface layer portion of said cord, and the early condensate of resorcin·formaldehyde and the rubber latex component deposited on further outer layer form respective layers, and by these features, the effect of the present invention can be achieved. That is, the polyester fiber cord for reinforcing rubber of the present invention exhibits an adhesive reaction between the polyester fiber and the early condensate of resorcin·formaldehyde and rubber latex, and prevents the permeation of the low molecular weight amine component or water molecule into the polyester cord without spoiling the adhesive reaction between the early condensate of resorcin·formaldehyde and rubber latex and the rubber, by the above-mentioned polyvinyl alcohol component, and as a result, improvements of the heat resistant adhesion and the heat resistant strength retention are achieved.

The polyvinyl alcohol used in the present invention is produced, for example, by saponification of polyvinyl ester obtained by polymerization of a vinyl ester. In addition, modified polyvinyl alcohols in which an unsaturated carboxylic acid or derivative thereof, unsaturated sulfonic acid or derivative thereof, α-olefin with 2 to 30 carbon atoms or the like is graft polymerized to the main chain of polyvinyl alcohol in a ratio of 5 mol% or less, modified polyvinyl alcohols produced by saponification of modified polyvinyl ester obtained by copolymerization of vinyl ester with an unsaturated carboxylic acid or derivatives thereof, unsaturated sulfonic acid or derivative thereof, α-olefin with 2 to 30 carbon atoms or the like in a ratio of 15 mol % or less, so-called polyvinyl acetal resins obtained by partially cross-liking hydroxyl groups of an unmodified or modified polyvinyl alcohol with aldehydes such as formalin, butyl aldehyde, benzaldehyde, or the like can be mentioned. As the above-mentioned vinyl esters, vinyl acetate, vinyl formate, vinyl propionate, vinyl lactate, vinyl pivalate, versatic vinyl ester, vinyl laurate, vinyl stearate, vinyl benzoate or the like are mentioned. Among these, vinyl acetate is especially preferable.

The comonomers used for the modified polyvinyl alcohol are those copolymerized for the purpose of modification of the polyvinyl alcohol, for example, olefins such as ethylene, propylene and 1-butene and isobutene; acrylic acid and salts thereof; acrylic acid esters such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate and octadecyl acrylate; methacrylic acid and salts thereof; methacrylic acid esters such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate and octadecyl methacrylate; acrylamide derivatives such as acrylamide, N-methyl acrylamide, N-ethyl acrylamide, N,N-dimethyl acrylamide, diacetone acrylamide, acrylamide propane sulfonic acid and salts thereof, acrylamide propyl dimethyl amine and salts thereof and N-methylol acrylamide and derivatives thereof; methacrylamide derivatives such as methacrylamide, N-methyl methacrylamide, N-ethyl methacrylamide, methacrylamide propane sulfonic acid and salts thereof, methacrylamide propyl dimethylamine and salts thereof, N-methylol methacrylamide and derivatives thereof; N vinyl amides such as N-vinyl formamide, N-vinyl acetamide and N-vinyl pyrrolidone; vinyl ethers such as methylvinyl ether, ethyl vinyl ether, n-propyl vinyl ether, i-propyl vinyl ether, n-butyl vinyl ether, i-butyl vinyl ether, t-butyl vinyl ether, dodecyl vinyl ether and stearyl vinyl ether; nitriles such as acrylonitrile and methacrylonitrile; halogenated vinyls such as vinyl chloride, vinylidene chloride, vinyl fluoride and vinylidene fluoride; allyl compounds such as allyl acetate and allyl chloride; maleic acid and salts or esters thereof; itaconic acid and salts or esters thereof; vinyl silyl compounds such as vinyl methoxy silane; isopropenyl acetate or the like can be mentioned. Among these, α-olefin is preferable and ethylene is especially preferable. The degree of modification of the modified polyvinyl alcohol is preferably less than 15 mol%.

The polyvinyl alcohol used in the present invention preferably has a saponification degree of 70 to 90 mol%, and more preferably, 70 to 80 mol%. If it is less than 70 mol%, due to insufficiency of reactive functional groups, adhesiveness may become insufficient, and if it exceeds 90mol%, its solubility becomes poor and cause a disadvantage of the production process, or adhesiveness under a hot and wet condition may decrease.

The above-mentioned saponification degree indicates the ratio of unit actually saponified into vinyl alcohol unit in the unit capable of being saponified into vinyl alcohol unit. Where, saponification degree of PVA was measured according to the method described in JIS.

Next, a preferable embodiment of the polyester fiber cord for reinforcing rubber of the present invention is that an epoxy compound is contained in the above-mentioned resin layer containing polyvinyl alcohol.

The epoxy compound which can be used in the present invention is that having two or more epoxy groups in one molecule.

The compound having two or more epoxy groups in one molecule is, for example, a glycidyl ether type epoxy resin obtainable from a compound having hydroxyl group in its molecule, a glycidyl amine type epoxy resin obtainable from a compound having amino group in its molecule, a glycidyl ester type epoxy resin obtainable from a compound having carboxyl group in its molecule, an alicyclic epoxy resin obtainable from a compound having unsaturated bond in its molecule, a heterocyclic epoxy resin such as triglycidyl isocyanate, or an epoxy resin in which two or more types selected from these are present in its molecule or the like.

As examples of the glycidyl ether type epoxy resin, a bisphenol A type epoxy resin obtainable from a reaction between bisphenol A and halogen-containing epoxides such as epichlorohydrin, a bisphenol F type epoxy resin obtainable from a reaction between bisphenol F and the above-mentioned halogen-containing epoxides, a biphenyl type epoxy resin obtainable from a reaction between biphenyl and the above-mentioned halogen-containing epoxides, a resorcinol type epoxy resin obtainable from a reaction between resorcinol and the above-mentioned halogen-containing epoxides, a bisphenol S type epoxy resin obtainable from a reaction between bisphenol S and the above-mentioned halogen-containing epoxides, a polyethylene glycol type epoxy resin which is a reaction product between polyvalent alcohols and the above-mentioned halogen-containing epoxides, a polypropylene glycol type epoxy resin, bis-(3,4-epoxy-6-methyl dicyclohexyl methyl) adipate, epoxy resin obtainable by oxidizing unsaturated bond portion of 3,4-epoxy-cyclohexene epoxide or the like, and other than that, a naphthalene type epoxy resin, a phenol novolac type epoxy resin, a cresol novolac type epoxy resin, and a halogen or alkyl substituent thereof, or the like can be used.

Among these, the epoxy compound which can effectively improve the heat resistant adhesion of the polyester fiber cord for reinforcing rubber is an aromatic polyepoxide compound. Said aromatic polyepoxide compound is, among the above-mentioned polyepoxide compounds, a compound having at least one aromatic ring and at least two epoxy groups in a molecular. As examples of such an aromatic polyepoxide compound, a reaction product between polyvalent phenols and halogen-containing epoxides such as epichlorohydrin, e.g., a reaction product between resorcin, bis-(p-hydroxy phenyl) methane, 1,1,2,2-tetrakis(p-hydroxy phenyl) ethane, bis-(4-hydroxy phenyl) dimethyl methane, phenol· formaldehyde resin, cresol·formaldehyde resin, resorcin formaldehyde resin or the like and epichlorohydrin, an aromatic epoxy resin which is a reaction product between bisphenol A and epichlorohydrin, or the like can be mentioned. Among these, glycidyl ether of phenol resins shown in the following formula is most preferable.

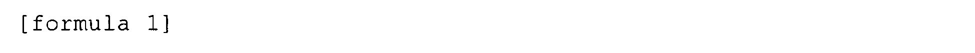

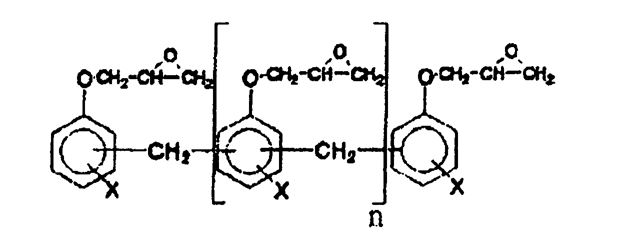

In the formula, X denotes hydrogen atom, halogen atom or alkyl group with 1 to 3 carbons, n denotes an integer of 1 to 5. Said aromatic polyepoxide compound is usually used as emulsion or dispersion. For making an emulsion or dispersion, for example, said aromatic polyepoxide compound, as it is or as a solution dissolved in a small amount of a solvent as required, may be emulsified or dispersed by using a known emulsifier, for example, such as sodium alkyl benzene sulfonate, sodium dioctyl sulfosuccinate, nonylphenol ethylene oxide additive or the like.

Furthermore, the main component, of the inner layer portion of the adhesive resin layers of the polyester fiber cord for reinforcing rubber of the present invention, i.e., the cord side portion, comprises polyvinyl alcohol and in view point of improving heat resistant adhesion, it is preferable to contain an epoxy compound, but it is possible to further improve the effect by further containing a rubber latex as the third component.

As the rubber latex which can be used in the present invention, for example, natural rubber latex, butadiene rubber latex, styrene· butadiene·rubber latex, vinyl pyridine-styrene-butadiene rubber latex, nitrile rubber latex, hydrogenated nitrile rubber latex, chloroprene rubber latex, chlorosulfonated rubber latex, ethylene· propylene·diene rubber latex or the like are mentioned, and these can be used alone or in combination. Among these, it is preferable to use vinyl pyridine-styrene-butadiene rubber latex alone, or in combination with others. More preferably, modified vinyl pyridine-styrene-butadiene rubber latex in which vinyl pyridine-styrene-butadiene rubber latex is copolymerized with ethylene-based unsaturated acid is preferably used alone, or in combination with others.

As ethylene-based unsaturated acid used here, unsaturated carboxylic acids such as acrylic acid, methacrylic acid, crotonic acid, cinnamic acid, itaconic acid, fumaric acid, maleic acid, butene tricarboxylic acid, monoalkyl esters of unsaturated carboxylic acid such as monoethy itaconate, monobutyl fumarate, monobutyl maleate, and unsaturated sulfonic acids or alkali salts thereof such as sodium sulfoethyl acrylate, sodium sulfopropyl methacrylate, acrylamide propane sulfonic acid, or the like are mentioned, and these can be used alone or in combination of two kinds or more.

Where, the carboxyl group may be introduced to the latex by hydrolysis after copolymerization of ethylene-based unsaturated acid ester monomer or ethylene-based unsaturated acid anhydride monomer. As the ethylene-based unsaturated acid ester monomer or ethylene-based unsaturated acid anhydride monomer, mono-, di-, or tri-esters of unsaturated carboxylic acid such as acrylic acid, methacrylic acid, crotonic acid, cinnamic acid, itaconic acid, fumaric acid, maleic acid, butene tricarboxylic acid, and maleic acid anhydride, or the like are exemplified, and these can be used alone or in combination of two kinds or more.

Furthermore, the main component of the inner layer portion of the adhesive layers of the polyester fiber cord for reinforcing rubber of the present invention comprises polyvinyl alcohol, and furthermore, an epoxy compound and rubber latex can be contained to improve the effect, but it is possible to further enhance the effect by containing a blocked polyisocyanate compound, and/or ethyleneimine compound as the fourth component.

As the blocked polyisocyanate compound and/or ethyleneimine compound which can be used in the present invention, the reaction product between a polyisocyanate compound such as tolylene diisocyanate, m-phenylene diisocyanate, diphenyl methane diisocyanate, hexamethylene diisocyanate, toriphenylmethane triisocyanate and phenols such as phenol, cresol, resorcin, lactams such as ε-caprolactam, valerolactam, oximes such as acetoxime, methylethyl ketone oxime, cyclohexanone oxime and blocking agents such as ethyleneimine, are mentioned. Among these compounds, in particular, aromatic polyisocyanate compound blocked with ε-caprolactam and aromatic ethylene urea compound such as diphenyl methane diethylene urea can be preferably used.

In the polyester fiber cord for reinforcing rubber of the present invention, the inner layer portion of the adhesive layer, i.e., the cord side comprises an adhesive containing polyvinyl alcohol, but a ratio of said polyvinyl alcohol to total deposited amount of solid content of the inner layer portion is 10 to 50 wt%, preferably, 20 to 40 wt%. If it is less than 10 wt%, the heat resistant adhesion when exposed to a high temperature may become insufficient, and if it exceeds 50 wt%, the initial adhesive strength may become insufficient.

The deposited amount of solid content of the inner layer portion of said adhesive layers to the polyester fiber is in the range of 0.5 to 10 wt% to the fiber weight and it is preferably in the range of 1 to 5 wt%. If the deposited amount of the solid content is too low, adhesiveness may decrease, on the other hand, if the deposited amount of solid content is too high, it is not preferable since the cord may become stiff, and the fatigue resistance may decrease.

The main component of the outer layer portion of the adhesive layers of the polyester fiber cord for reinforcing rubber of the present invention consists of an early condensate of resorcin· formaldehyde and a rubber latex. It is preferable that said resorcin· formaldehyde is prepared with an early condensate of resorcin· formaldehyde obtained, especially, by an early condensation in a presence of alkali catalyst. For example, it is prepared by adding and mixing resorcin and formaldehyde into an alkaline aqueous solution containing alkaline compound such as sodium hydroxide, leaving the mixture at room temperature for several hours to allow the resorcin and formaldehyde an early condensation, and then rubber latex is added thereto to prepare mixed emulsion.

An early condensate of resorcin·formaldehyde of which molar ratio of resorcin to formaldehyde is in the range of 1:0.3 to 1:5, preferably, 1:0.75 to 1:2.0 is used. If the molar ratio of formaldehyde is less than the above-mentioned range, the treated cord becomes sticky and may stain the treating machine; on the other hand, if the molar ratio of formaldehyde exceeds the range, adhesiveness becomes insufficient.

The outer layer portion of the adhesive layers of the polyester fiber cord for reinforcing rubber of the present invention comprises the early condensate of resorcin·formaldehyde and rubber latex as its main component, but said outer layer adhesive can further prevent degradation of the polyester fiber by containing the phenol-based compound shown in the following general formula, together with the early condensate of resorcin·formaldehyde.

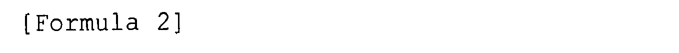

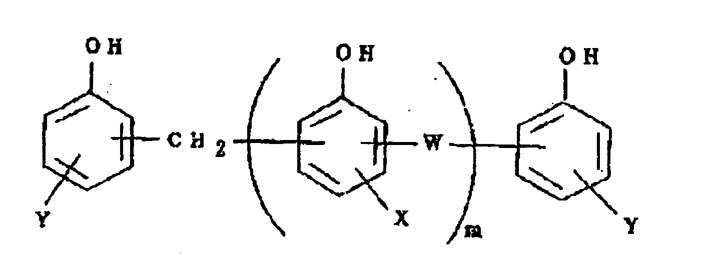

Where, in the formula, W denotes CH₂ or Sn, X, Y denote a group selected from Cl, Br, I, H, OH and C₁ to C₆ alkyl group, n denotes an integer of 1 to 8, m denotes an integer of 1 to 15. The phenol-based compound shown in the above-mentioned general formula is an early condensate of an halogenated phenol compound and formaldehyde, an early condensate particle of a sulfur modified resorcin and formaldehyde or an early condensate of a halogenated sulfur modified resorcin and formaldehyde.

The preparation method of these phenol-based compounds are not especially restricted but, for example, p-chlorophenol, o-chlorophenol, p-bromophenol, p-iodophenol, o-cresol, p-cresol, p-t-butylphenol and 2,5-dimethylphenol or the like are mentioned as starting materials, and among them, p-chlorophenol, p-bromophenol, p-cresol and p-t-butylphenol, especially, p-chlorophenol is preferably used.

By condensation of these starting materials with formaldehyde in presence of an alkaline catalyst, or by allowing the starting material to react in presence of an acid catalyst beforehand and allowing the obtained condensate to react in presence of an alkaline catalyst and allowing the obtained condensate to react with formaldehyde in presence of an alkaline catalyst, the phenol-based compound can be obtained.

As rubber latexes used to prepare the resorcin· formaldehyde· latex, for example, natural rubber latex, butadiene rubber latex, styrene·butadiene rubber latex, vinyl pyridine-styrene-butadiene rubber latex, nitrile rubber latex, hydrogenated nitrile rubber latex, chloroprene rubber latex, chlorosulfonated rubber latex, ethylene·propylene·diene rubber latex or the like are mentioned, and these can be used alone or in combination. Among these, it is preferable to use the vinyl pyridine-styrene-butadiene rubber latex alone or in combination with others. More preferably, it is preferable to use modified vinyl pyridine-styrene-butadiene rubber latex, in which the vinyl pyridine-styrene-butadiene rubber latex is copolymerized with ethylene-based unsaturated acid, alone or in combination with others.

As the ethylene-based unsaturated acid used here, unsaturated carboxylic acid such as acrylic acid, methacrylic acid, crotonic acid, cinnamic acid, itaconic acid, fumaric acid, maleic acid, butene tricarboxylic acid, monoalkyl ester of unsaturated dicarboxylic acid such as monoethy itaconate, monobutyl fumarate, monobutyl maleate, and unsaturated sulfonic acids or alkali salts thereof such as sodium sulfoethyl acrylate, sodium sulfopropyl methacrylate, acrylamide propane sulfonic acid, or the like are mentioned, and these can be used alone or in combination of two kinds of more.

Where, the carboxyl group may be introduced into the latex by hydrolysis after copolymerizing the ethylene-based unsaturated acid ester monomer or ethylene-based unsaturated acid anhydride monomer. As the ethylene-based unsaturated acid ester monomer or ethylene-based unsaturated acid anhydride monomer, mono-, di- or tri-ester of unsaturated carboxylic acid such as acrylic acid, methacrylic acid, crotonic acid, cinnamic acid, itaconic acid, fumaric acid, maleic acid, butene tricarboxylic acid, and maleic acid anhydride, or the like are exemplified, and these can be used alone or in combination of two kinds or more.

The compounding ratio of the early condensate of resorcin· formaldehyde to the rubber latex in the resorcin·formaldehyde·latex is preferably 1:3 to 1:8 in solid content weight ratio, and it is more preferable to be in the range of 1:4 to 1:6. If it is out of this range, adhesiveness may become insufficient. In addition, the compounding ratio of the resorcin·formaldehyde·latex to the above-mentioned phenol-based compound is preferably 10:1 to 10:5 in solid content weight ratio, more preferably, 10:2 to 10:4. If it is out of this range, adhesiveness may become insufficient.

In the outer layer portion of the adhesive layers of the polyester fiber cord, a deposited amount of solid content of said outer layer adhesive is in the range of 1 to 10 wt%, preferably, in the range of 1.5 to 5 wt%. If the deposited amount of the solid content is too low, adhesiveness decreases, on the other hand, if the deposited amount of solid content is too high, the cord becomes stiff, and the fatigue resistance decreases or the solid content gums up to rolls during production process to thereby worsen process stability.

Furthermore, the above-mentioned polyester fiber cord is a twisted cord subjected to a first twist and a second twist, and it is preferable that the first twist coefficient K₁ is 300 ≤ K₁ ≤ 1200, more preferably, 400 ≤ K₁ ≤ 1100, still more preferably, 500 ≤ K₁ ≤ 1000. When the first twist coefficient is out of the preferable range, the adhesive strength after exposing to a high temperature may decrease, or the fatigue resistance in rubber may degrade. And, it is preferable that the second twist coefficient K₂ is 400 ≤ K₂ ≤ 1600, more preferably, 600 ≤ K₂ ≤ 1400, still more preferably, 800 ≤ K₂ ≤ 1200. When the second twist coefficient is out of the preferable range, the adhesive strength after exposing to a high temperature may decrease, or the fatigue resistance in rubber may degrade. (where, K = TxDl/2, T: twist number per unit length (turns/10cm), D: marked denier)

The polyester fiber cord characterized as above of the present invention is significantly improved in the heat resistant adhesion and heat resistant strength retention when exposed to a high temperature for a long time during vulcanization of rubber or during use of the rubber product. The rubber product reinforced by the polyester fiber cord of the present invention can stand a severe and long use when used as a tire, belt or hose. In particular, it is suitable for a cap ply cord of radial tire to which the conventional polyester fiber cord could not be used.

Recently, a high performance tire which is suitable for high speed driving is more demanded, and in the radial tire developed to meet the requirement, a cap ply cord becomes to be used to firmly suppress from over the steel belt an expansion of tire owing to the centrifugal force at high speed driving and the change of compressive strength when contacted to the earth. Since the cap ply cord generate more heat than the carcass portion, the conventional polyester cord cannot be used, and nylon 66 fiber which is excellent in adhesive property at high temperature is overwhelmingly widely used.

However, since it is preferable to be of high modulus as the characteristics of said cap ply cord, polyester fiber is preferable as its fiber material. And furthermore, since the polyester fiber is also of low price, a development of a polyester fiber cord which can be used for a cap ply has been strongly demanded. To such a demand, the polyester fiber cord of the present invention is significantly improved in the heat resistant adhesion and heat resistant strength retention, and it become possible to provide a suitable material for the cap ply cord for the fist time.

Next, the production method of said polyester fiber cord for reinforcing rubber is explained.

Said polyester fiber cord for reinforcing rubber of the present invention can be obtained, in the production method of polyester fiber cord for reinforcing rubber to which the adhesive is imparted by a 2 baths dipping method, by imparting an adhesive containing polyvinyl alcohol, and in the second bath, imparting the early condensate of resorcin·formaldehyde and rubber latex.

It is preferable that the polyester fiber used in the production method of the polyester fiber cord for reinforcing rubber of the present invention has the above-mentioned characteristics, that is, it satisfies (1) inherent viscosity (IV), (2) carboxyl terminal (COOH), (3) diethylene glycol (DEG), (4) strength (T) = 6.0 to 10.0cN/dtex, (5) elongation (E) = 8 to 20%, (6) medium elongation (ME) and (7) dry heat shrinkage (ΔS_{150°C}).

Next, said polyester fiber is twisted to make into a gray cord of the above-mentioned twist coefficient, and then woven into a tire cord fabric by using a weaving machine for tire fabric in the same way. In cases of a hose, belt and cap ply cord, the first twist cord or ply cord is provided to the next dipping step as it is without weaving.

Furthermore, in the production method of the present invention, it is preferable to use a twisted cord subjected to a first twist and a second twist as the above-mentioned polyester fiber cord, and the first twist coefficient K₁ is preferably 300 ≤ K₁ ≤ 1200, more preferably, 400 ≤ K₁ ≤ 1100, still more preferably, 500 ≤ K₁ ≤ 1000. When the first twist coefficient is out of the preferable range, the adhesive strength after exposing to a high temperature may decrease, or the fatigue resistance in rubber may degrade. In addition, second twist coefficient K₂ is preferably 400 ≤ K₂ ≤ 1600, more preferably, 600 ≤ K₂ ≤ 1400, still more preferably, 800 ≤ K₂ ≤ 1200. When the second twist coefficient is out of the preferable range, the adhesive strength after exposing to a high temperature may decrease or the fatigue resistance in rubber may degrade. (where, K = T × D^{1/2}, T: twist number per unit length (turns/10cm), D: marked denier).

The method of the present invention is a 2 baths dipping method and, in the first bath, an adhesive containing polyvinyl alcohol is imparted, and in the second bath, the early condensate of resorcin·formaldehyde and rubber latex are imparted.

As the polyvinyl alcohol, the epoxy compound to be added as the second component, the rubber latex to be added as the third component and the blocked polyisocyanate compound and/or ethyleneimine compound to be added as the forth component which are used in the first bath, the same components as above-mentioned are used.

In the present invention, it is not necessary to impart a part of the adhesive to the polyester fiber at spinning step. In case where a part of the adhesive is imparted at fiber-making step, it is necessary to select the adhesive in consideration of processability of fiber-making, but since the adhesive is imparted in dipping step in said production method, it is possible to select the adhesive considering the heat resistance in rubber which is the object of the present invention.

Thus, the polyester fiber cord for reinforcing rubber to which the adhesive is imparted is produced with the 2 baths dipping method, not by performing pretreatment to impart a part of the adhesive beforehand, but by imparting, in the first bath, the adhesive containing polyvinyl alcohol, and imparting in the second bath, the early condensate of resorcin·formaldehyde and rubber latex, and the polyester fiber cord for reinforcing rubber is produced such that the main component of the inner layer portion of cord of the adhesive layers comprises the polyvinyl alcohol, and main component of the outer layer portion of cord of adhesive layers comprises the early condensate of resorcin·formaldehyde and rubber latex. Similarly, adhesive component to be added in the first bath and the adhesive component to be added in the second bath are the same as the above-mentioned.

The method for imparting the adhesive containing the polyvinyl alcohol in the first bath is carried out by immersing the polyester fiber gray cord or the gray tire cord fabric in the dipping liquid in which the adhesive containing said polyvinyl alcohol is prepared as an aqueous solution or aqueous dispersion, then by drying and heat treating. Regarding the total solid concentration of dipping liquid of said first bath, it is suitable to use in the range of 2 to 20wt%, preferably, 3 to 15wt%. When said solid concentration is too low, the surface tension of the adhesive increases to impair the uniform depositing ability to the polyester fiber surface and decrease the deposited amount of solid content to thereby decrease the adhesiveness, on the other hand, when said solid concentration is too high, since the deposited amount of the solid content becomes too large, the cord becomes stiff, and the fatigue resistance may decrease, and it is not preferable.

And, to the dipping liquid of the first bath, it is preferable to add a dispersant, i.e., a surfactant in an amount of 10 wt% or less, preferably, 5 wt% or less to the total solid content of said dipping liquid. When it exceeds 10 wt%, adhesiveness decreases.

The deposited amount of the solid content of the dipping liquid of the first bath to the polyester fiber is in the range of 0.5 to 10 wt% to the fiber weight, preferably, in the range of 1 to 5wt%. If the deposited amount of solid content is too small, adhesiveness decreases, on the other hand, if the deposited amount of solid content is too large, the cord becomes stiff and the fatigue resistance may decrease. In order to control the deposited amount of solid content to said polyester fiber, for example, means such as squeezing by pressurized rollers after immersed in the dipping liquid, scraping off by a scraper or the like, blowing off by pressurized air or suction can be applied. In addition, in order to increase the deposited amount, it is possible to deposit repeatedly.

The polyester fiber cord imparted with the dipping liquid of the first bath is dried at 70 to 150°C for 0.5 to 5 minutes, and then heat treated at 200 to 255°C for 0.5 to 5 minutes to form an adhesive film on the fiber surface, but in some cases, it is possible to skip the drying step.

When the temperature of the above-mentioned heat treatment is lower than 200°C, the adhesive film formation on the fiber and its reaction with the rubber may be insufficient and the adhesive strength may become insufficient, and on the other hand, at a high temperature exceeding 255°C, the treating agent film formed on the fiber may degrade to decrease the adhesive strength, or the polyester fiber may degrade by heat to decrease its strength, and it is not preferable.

As mentioned above, after imparting the dipping liquid of the first bath, successively impart the dipping liquid of the second bath which contains the resorcin·formaldehyde·rubber latex.

The dipping liquid of the second bath which contains the resorcin·formaldehyde·latex has a solid concentration of 5 to 30 wt%, preferably, 10 to 25 wt%. If it is less than 5 wt%, the deposited amount of solid content of the dipping liquid of the second bath becomes insufficient, and the adhesive strength may become insufficient. If the solid concentration exceeds 30 wt%, storage stability of said dipping liquid becomes worse, i.e., the solid content coagulate to change its concentration and it becomes impossible to uniformly deposit the dipping liquid on the polyester fiber cord.

The deposited amount of solid content of said second bath to the polyester fiber cord is in the range of 1.0wt% to 10wt%, preferably, in the range of 1.5 wt% to 5 wt%. When the deposited amount of the solid content is too low, the adhesiveness may decrease, on the other hand, when the deposited amount of the solid content is too high, the cord may become stiff and the fatigue resistance may decrease, or the solid content gums up to rolls during production process to thereby worsen process stability.

In order to control the deposited amount of solid content to said polyester fiber, for example, means such as squeezing by pressurized rollers, scraping off by a scraper or the like, blowing off by pressurized air or a suction can be applied. In addition, in order to increase the deposited amount, it is possible to deposit repeatedly.

The polyester fiber cord imparted with the dipping liquid of the second bath is dried at 70 to 150°C for 0.5 to 5 minutes, and then heat treated at 200 to 255°C for 0.5 to 5 minutes to form an adhesive film on the fiber surface, but in some cases, it is possible to skip the drying step. When the temperature of the above-mentioned heat treatment is lower than 200°C, the adhesive film formation on the fiber and its adhesion with the rubber may become insufficient, and on the other hand, at a high temperature exceeding 255°C, the treating agent film formed on the fiber may degrade to decrease the adhesive strength, or the polyester fiber may degrade by heat to decrease its strength, and it is not preferable.

The polyester cord produced by the above-mentioned 2 baths dipping method of the present invention becomes the polyester fiber cord for reinforcing rubber of which inner layer portion of the adhesive layer, i.e., the main component of cord side portion, comprises polyvinyl alcohol, and the main component of the outer layer portion of said adhesive layers consists of the early condensate of the resorcin·formaldehyde and the rubber latex. And, it is excellent in the heat resistant adhesion and heat resistant strength retention, and can stand a severe and long use when applied to rubber materials such as a conventional tire carcass material, hose and belt, and can preferably be used as the cap ply cord which could not conventionally be applied.

### [EXAMPLES]

Hereafter, the present invention is explained in more detail with reference to Examples, but the present invention is not restricted thereto. Where, in the present invention, the measuring or evaluation methods of physical properties of the polyester fiber cord for reinforcing rubber are as follows.
(1) Strength of cord
   It was measured according to JIS L-1017 (1983) by using "Tensilon".
(2) T-initial adhesive strength and T-heat resistant adhesive strength
   It shows the adhesive strength between a treated cord and a rubber. According to the adhesive strength-A method of JIS L-1017 (1983), a treated cord is embedded in an unvulcanized rubber, subjected to press-vulcanization under pressure at 150°C for 30 minutes in case of the initial adhesive strength, or at 170°C for 70 minutes in case of the heat resistance adhesive strength, and after cooling to room temperature, the cord is pultruded from the rubber block at a speed of 300 mm/min, and the load required for the pultrusion is expressed in N/cm.
(3) Heat resistance in rubber
   It shows strength retention after vulcanization in rubber. After a cord is kept in constant length in a rubber during vulcanization at 170°C for 3 hours, or for 6 hours, the cord is taken out from the rubber and a tensile strength at break is measured at a speed of 300 mm/min, and the strength retention to the initial strength is expressed in percent.

Where, the composition of the rubber compound used in the measurement of T-adhesive strength is as follows.

| | |
|---|---|
| natural rubber (RSS#1) | 70(parts by weight) |
| SBR (JSR1501) | 20 (parts by weight) |
| SRF carbon black | 40 (parts by weight) |
| stearic acid | 2 (parts by weight) |
| sulfur | 2 (parts by weight) |
| zinc white | 5 (parts by weight) |
| 2,2'-dithiobenzothiazol | 2 (parts by weight) |
| naphthenic acid process oil | 3 (parts by weight). |

### (Examples 1 to 10)

Polyvinyl alcohol, polyepoxide compound ("Denacol" EX313 (made by Nagase Chemicals Ltd.)), and vinyl pyridine-styrene-butadiene rubber latex (V9625 (made by Japan A&L)), blocked polyisocyanate compound were mixed in the solid content weight ratio shown in Table 1, respectively, to obtain an adhesive of total solid content 5.0 wt% (inner layer adhesive). Where, the codes shown in Table 1 are as follows.
A: compounding ratio of polyvinyl alcohol (parts by weight)
B: compounding ratio of polyepoxide compound (parts by weight)
C: compounding ratio of vinyl pyridine-styrene-butadiene rubber latex (parts by weight)
D: compounding ratio of blocked polyisocyanate compound (parts by weight).

Resorcin/formalin of molar ratio 1/1.4 was mixed under presence of sodium hydroxide, adjusted such that the solid content concentration would be 10% and aged for 2 hours to obtain an early condensate of the resorcin·formalin. Next, this early condensate and the vinyl pyridine-styrene-butadiene rubber latex (V9625 (made by Japan A&L)) were mixed in a solid content weight ratio of 100/30 and aged for 24 hours. Furthermore, 20 parts of chlorine-modified early condensate of resorcin·formaldehyde ("Denabond-E" (made by Nagase Chemicals Ltd.)) was mixed to 100 parts by weight of solid content of the above-mentioned resorcin· formalin·latex, and aged further for 20 hours. This mixture was diluted with water to obtain an adhesive of solid content weight 15% (outer layer adhesive).

Two multi-filament yarns of 1100 dTex obtained by melt spinning and drawing a polyethylene terephthalate having a viscosity of 0. 95 in an ordinary way, were twisted in twist numbers of first twist 21 turns/10cm and a second twist 21 turns/10cm, to obtain an untreated cord.

By using a Computreater (manufactured by C. A. Litzler Co., Inc.), said untreated cord was immersed in said inner layer adhesive, and then dried at 120°C for 2 minutes, successively heat treated at 240°C for 1 minute. Subsequently, it was immersed in said outer layer adhesive, and then dried at 120°C for 2 minutes, successively heat treated at 240°C for 1 minute. To the obtained treated cord, 2.0% in solid content of the inner layer adhesive and 3.0% of the outer layer adhesive were deposited.

The obtained treated cord was embedded in an unvulcanized rubber, and after vulcanization, the T-initial adhesive strength, the T-heat resistant adhesive strength and the heat resistance in rubber were measured, respectively. The results are shown in Table 1.

### (Comparative examples 1 to 4)

Exactly the same procedures as Example 1 were carried out except changing the inner layer adhesive to the compositions shown in Table 1. The results were shown in Table 2.

### (Comparative examples 11 to 14)

Exactly the same procedures as Example 5 were carried out except changing the twist coefficients to those shown in Table 1. The results were shown in Table 2.

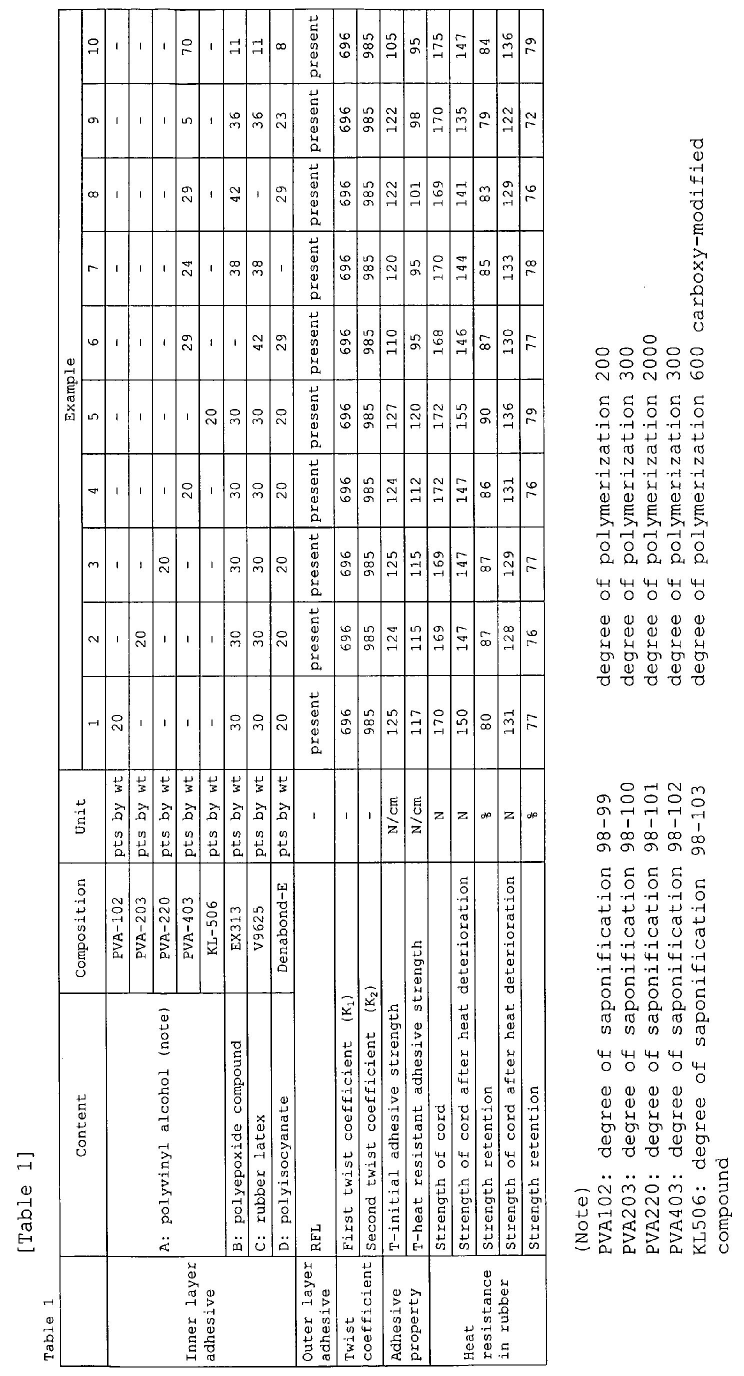

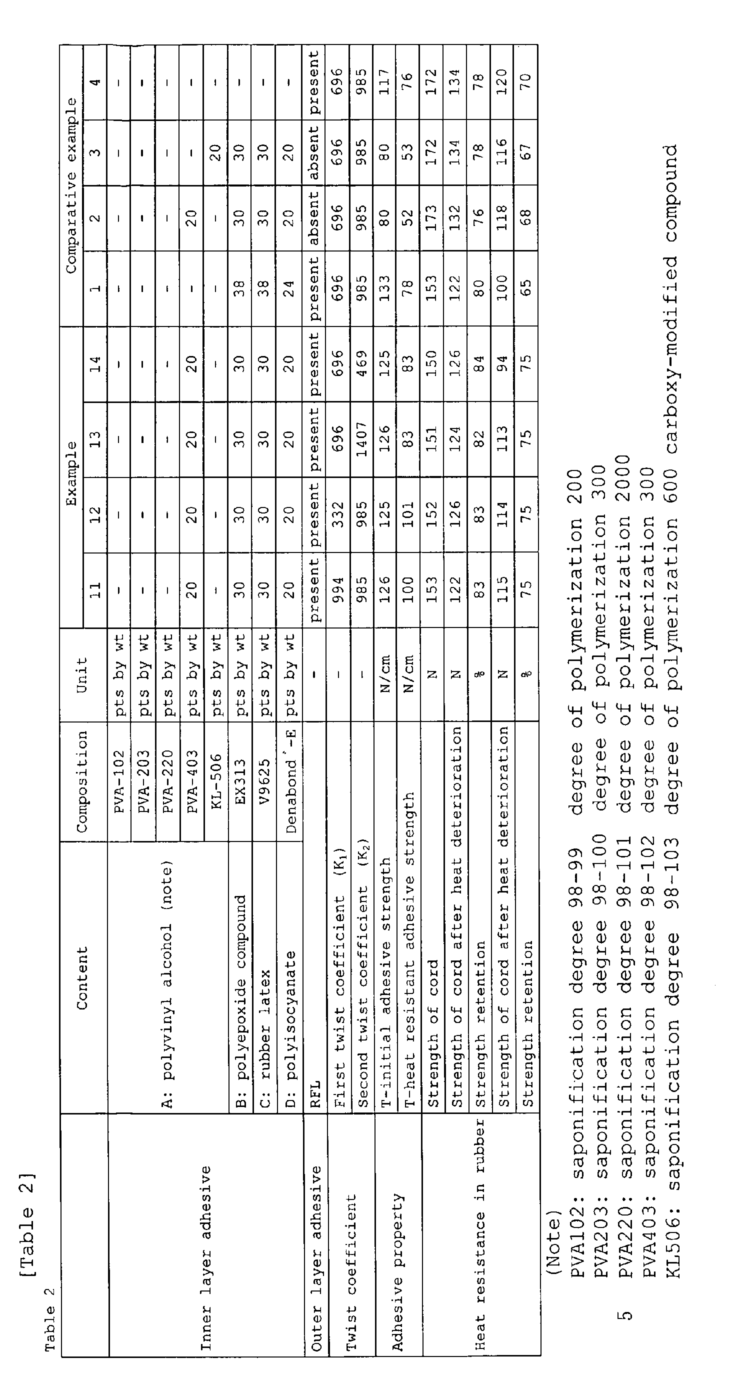

As shown in Table 1, in cases of Examples 1 to 10 of the present invention, it is found that the degradation in rubber can greatly be improved compared to the conventional polyester fiber for reinforcing rubber (Comparative examples 1 to 4).

### [Industrial Applicability]

The rubber product reinforced by the polyester fiber cord of the present invention can stand a severe and long use when applied to a tire, belt or hose. Especially, it is suitable for a cap ply cord of radial tire to which the conventional polyester fiber cord could not be applied.

## Claims

1. A polyester fiber cord for reinforcing rubber, **characterized in that** it is a polyester fiber cord for reinforcing rubber having inner and outer adhesive layers, and the inner layer portion of said adhesive layers consists of a resin layer containing a gas barrier resin of which oxygen permeation rate measured under condition of humidity of 50 %RH is 10 cc.20 µm/m². day·atm or less, and the outer layer portion of said adhesive resin layers consists of a resin layer of which main components are an early condensate of resorcin·formaldehyde and a rubber latex, respectively.

2. A polyester fiber cord for reinforcing rubber, **characterized in that** it is a polyester fiber cord for reinforcing rubber having inner and outer adhesive layers and the inner layer portion of said adhesive resin layers consists of a resin layer containing polyvinyl alcohol, and the outer layer portion of said adhesive resin layers consists of a resin layer of which main components are an early condensate of resorcin·formaldehyde and a rubber latex, respectively.

3. A polyester fiber cord for reinforcing rubber according to Claim 2, **characterized in that** the inner layer portion of said adhesive resin layers further contains an epoxy compound.

4. A polyester fiber cord for reinforcing rubber according to Claim 2, **characterized in that** an amount of said polyvinyl alcohol is in the range of 10 to 50 wt% to the total solid component of the adhesive in said inner layer portion.

5. A polyester fiber cord for reinforcing rubber according to Claim 2, **characterized in that** a saponification degree of said polyvinyl alcohol is 70 to 90 mol%.

6. A polyester fiber cord for reinforcing rubber according to Claim 2, **characterized in that** an amount of deposited resin in the inner layer portion of said adhesive layers in solid content ratio is 0.5 to 10 wt% per fiber weight, and an amount of deposited resin in the outer layer portion of said adhesive layers in solid content ratio is 1 to 10 wt% per fiber weight.

7. A polyester fiber cord for reinforcing rubber according to Claim 2, **characterized in that** said polyester fiber cord for reinforcing rubber is a twisted cord subjected to a first twist and a second twist and the first twist coefficient K₁ is 300 ≤ K₁ ≤ 1200 and the second twist coefficient K₂ is 400 ≤ K₂ ≤ 1600. (Where, K = T x D^{1/2}, T: twist number per unit length (turns/10cm), D: marked denier)

8. A cap ply part of tire in which the polyester fiber cord for reinforcing rubber according to Claim 2 is used.

9. A tire in which the polyester fiber cord for reinforcing rubber described in Claim 2 is used as a cap ply part.

10. A production method of polyester fiber cord for reinforcing rubber having an adhesive layer consisting of an inner and outer resin layers **characterized in that**, in the production method of polyester fiber cord for reinforcing rubber to which the adhesive is imparted by a 2 baths dipping method, in the first bath, an adhesive containing polyvinyl alcohol is imparted, and in the second bath, an adhesive containing an early condensate of resorcin· formaldehyde and a rubber latex is imparted.

11. A production method of polyester fiber cord for reinforcing rubber according to Claim 10, **characterized in that**, in the adhesive used in said first bath, an epoxy compound is contained.

12. A production method of polyester fiber cord for reinforcing rubber according to Claim 10, **characterized in that**, an amount of said polyvinyl alcohol is in the range of 10 to 50 wt% to the total solid component of the adhesive in the inner layer portion of the adhesive layers.

13. A production method of polyester fiber cord for reinforcing rubber according to Claim 10, **characterized in that**, a saponification degree of said polyvinyl alcohol is 70 to 90 mol%.

14. A production method of polyester fiber cord for reinforcing rubber according to Claim 10, **characterized in that** an amount of deposited resin in the inner layer portion of said adhesive layers in solid content ratio is 0.5 to 10 wt% per fiber weight, and an amount of deposited resin in the outer layer portion of said adhesive layers in solid content ratio is 1 to 10 wt% per fiber weight.

15. A production method of polyester fiber cord for reinforcing rubber according to Claim 10, **characterized in that**, in the production method of said polyester fiber cord for reinforcing rubber, it is a twisted cord subjected to a first twist and a second twist and the first twist coefficient K₁ is 300 ≤ K₁ ≤ 1200 and the second twist coefficient K₂ is 400 ≤ K₂ ≤ 1600. (where, K = T x D^{1/2}, T: twist number per unit length (turns/10cm) , D: marked denier)
